# EUROPÄISCHE PATENTSCHRIFT

(11) **EP 3 212 938 B1**
(45) Veröffentlichungstag und Bekanntmachung des Hinweises auf die Patenterteilung: **09.03.2022**
(21) Anmeldenummer: 15787928.9
(22) Anmeldetag: 21.10.2015
(51) Int. Cl.: F04D 13/06, F04D 15/00, F02M 37/08

(54) **VORRICHTUNG UND VERFAHREN ZUM STEUERN EINER FLUIDPUMPE FÜR EIN KRAFTFAHRZEUG**
APPARATUS AND METHOD FOR CONTROLLING A FLUID PUMP FOR A MOTOR VEHICLE
DISPOSITIF ET PROCÉDÉ POUR COMMANDER UNE POMPE À FLUIDE D'UN VÉHICULE À MOTEUR

(30) Priorität: 31.10.2014 DE 102014222338
(43) Veröffentlichungstag der Anmeldung: 06.09.2017
(73) Patentinhaber: Vitesco Technologies GmbH, 93055 Regensburg (DE)
(72) Erfinder: GRAF, Rolf, 61479 Glashütten (DE); KRONENBERG, Klaus, 65843 Sulzbach (DE)
(74) Vertreter: Vitesco Technologies
(86) Internationale Anmeldenummer: PCT/EP2015/074404
(87) Internationale Veröffentlichungsnummer: WO 2016/066502

(56) Entgegenhaltungen:
- US-A- 4 451 112
- US-A1- 2014 271 235

## Beschreibung

Die vorliegende Erfindung betrifft Vorrichtungen und Verfahren zum Steuern einer Fluidpumpe für ein Kraftfahrzeug. Insbesondere betrifft die vorliegende Erfindung eine Vorrichtung und ein Verfahren zum Steuern einer Kraftstoffpumpe für ein Kraftfahrzeug.

Moderne Fluidpumpen für Kraftfahrzeuge nutzen Antriebsmotoren nach dem EC-Prinzip, "EC" ist dabei abgekürzt für den englischen Begriff "electronically commutated", auf Deutsch "elektronisch kommutiert".

Diese Antriebsmotoren nach dem EC-Prinzip weisen das Prinzip einer permanent erregten Synchronmaschine auf und können über einen bestimmten Drehzahlbereich betrieben werden. Aus Gründen der damit verbundenen Produktionskosten und Zuverlässigkeit werden diese Motoren im Kraftfahrzeugbereich in Fluidpumpen ohne Positionssensoren betrieben.

Dies ist möglich, weil die zum Betrieb notwendige Elektronik in der Lage ist, die Gegen-EMK, abgekürzt für elektromotorische Kraft, anders ausgedrückt die Induktionsspannung, der freilaufenden Phase zu detektieren und als Positionssignal des Rotors zu verwenden. Diese Methode der Positionsbestimmung des Rotors ist aber auf eine gewisse Mindestdrehzahl beschränkt. Darunter kann kein verwertbares Nutzsignal erkannt werden. Damit ist der Drehzahlbereich der Fluidpumpe nach unten hin beschränkt.

Fluidpumpen für Kraftfahrzeuge werden in unterschiedlichen Varianten für Otto- und Dieselkraftstoff betriebene Motoren hergestellt. Für Ottokraft betriebene Motoren werden Strömungspumpwerke als Fluidpumpen eingesetzt. Für Dieselkraftstoff betriebene Motoren werden Verdränger-Pumpwerke als Fluidpumpe typischerweise nach dem Gerotor-, Schrauben- oder Rollenzellenprinzip eingesetzt. Die Pumpwerke nach dem Verdränger-Prinzip weisen zumeist eine hohe hydraulisch-mechanische Steifheit gegenüber den Strömungspumpwerken auf. Dies bewirkt einen starken Druckanstieg, falls eine Ungleichheit zwischen geförderter und abgenommener Menge in einem Kraftstoffsystem vorhanden ist.

Aus dem Druckanstieg resultieren ein starker Anstieg des zum Betrieb des Pumpwerks nötigen Drehmoments und auch ein entsprechender Strom der antreibenden Elektromaschine.

Herkömmliche Kraftstoffsysteme in einem Kraftfahrzeug oder Personenkraftwagen werden mit verschiedenen internen Verbrauchern ausgestattet, beispielsweise Saugstrahlpumpen. Diese führten zu einer Mindestabnahme an Kraftstoff.

Es ist eine Aufgabe der vorliegenden Erfindung, eine verbesserte Steuerungsvorrichtung und ein verbessertes Steuerungsverfahren für Fluidpumpen, welche in einem Kraftfahrzeug eingesetzt werden, bereitzustellen.

Die Druckschrift US 20140271235 A1 beschreibt Systeme und Verfahren zum Steuern der Geschwindigkeit einer Pumpe, die konfiguriert ist, Flüssigkeit durch ein Pumpsystem zu fördern.

Diese Aufgabe wird durch die Gegenstände der unabhängigen Patentansprüche gelöst. Ausführungsformen und Weiterbildungen sind den abhängigen Ansprüchen, der Beschreibung und den Figuren zu entnehmen.

Ein erster Aspekt der vorliegenden Erfindung betrifft eine Vorrichtung zum Steuern einer Fluidpumpe für ein Kraftfahrzeug, wobei die Vorrichtung gekennzeichnet ist durch: eine erste Steuerungseinrichtung, welche dazu ausgelegt ist, eine elektrische Kraftmaschine der Fluidpumpe durch ein Einprägen von mindestens einem Motorstrom mit einer angepassten Stromstärke und einer angepassten Kurvenform anzusteuern; und eine zweite Steuerungseinrichtung, welche dazu ausgelegt ist, eine Drehzahl der elektrischen Kraftmaschine zu erfassen und basierend auf der erfassten Drehzahl eine angepasste Spannung an die elektrische Kraftmaschine anzulegen, wobei die Vorrichtung dazu ausgelegt ist, die erfasste Drehzahl der elektrischen Kraftmaschine mit einem Drehzahlschwellenwert für die elektrische Kraftmaschine zu vergleichen.

Die vorliegende Erfindung betrifft eine Fluidpumpe für ein Kraftfahrzeug, wobei die Fluidpumpe als Kraftstoff-, Wasser- oder Ölpumpe oder als eine sonstige Pumpe für eine Flüssigkeit oder ein Fluid ausgebildet sein kann.

Nach einem weiteren, zweiten Aspekt der vorliegenden Erfindung ist eine Fluidpumpe für ein Kraftfahrzeug vorgesehen, wobei die Fluidpumpe eine Vorrichtung nach dem ersten Aspekt umfasst.

Nach einem weiteren, dritten Aspekt der vorliegenden Erfindung ist ein Verfahren zum Steuern einer Fluidpumpe für ein Kraftfahrzeug vorgesehen, wobei das Verfahren folgende Schritte umfasst: Erfassen einer Drehzahl der elektrischen Kraftmaschine und Vergleichen der erfassten Drehzahl mit einem Drehzahlschwellenwert für die elektrische Kraftmaschine; Einprägen von mindestens einem Motorstrom mit einer angepassten Stromstärke und einer angepassten Kurvenform in die elektrische Kraftmaschine, falls die erfasste Drehzahl der elektrischen Kraftmaschine unterhalb des Drehzahlschwellenwerts für die elektrische Kraftmaschine liegt; und Anlegen einer angepassten Spannung an die elektrische Kraftmaschine basierend auf der erfassten Drehzahl, falls die erfasste Drehzahl der elektrischen Kraftmaschine oberhalb des Drehzahlschwellenwerts für die elektrische Kraftmaschine liegt.

Die vorliegende Erfindung ermöglicht vorteilhaft, dass mit der zum Betrieb einer nach dem EC-Prinzip betriebenen Fluidpumpe ohnehin notwendigen Leistungselektronik bzw. Steuerungseinrichtungen der Pumpenstrom überwacht und gegebenenfalls begrenzt wird und ferner diese Leistungselektronik auch zum Ansteuern der Fluidpumpe verwendet wird.

Wenn eine solche Elektronik bzw. Steuerungseinrichtungen die Fluidpumpe unterhalb einer Mindest-Drehzahlgrenze betreiben soll, kann die vorliegende Erfindung vorteilhaft diese Eigenschaft - das Begrenzen und Überwachen - zum Ansteuern der Fluidpumpe benutzen.

Die Elektronik bzw. Leistungselektronik in Form einer Steuerungseinrichtung betreibt im heute üblichen Betriebsfall die Fluidpumpe durch eine Drehzahlregelung. Hierbei wird permanent die an dem Motor anliegende Spannung beeinflusst, um eine bestimmte, vorgegebene Drehzahl unabhängig vom hydraulischen Zustand am Pumpwerk zu erreichen.

Falls die Notwendigkeit nach einer entsprechenden im Vergleich dazu verringerten Drehzahl besteht, wird in diesem Fall unterhalb des vorbestimmten Drehzahlgrenzwertes bzw. Drehzahlschwellenwertes ein verändertes Betriebsverhalten der Pumpe aktiviert.

Mit anderen Worten, es kann eine zweite Steuerungseinrichtung bzw. ein alternatives Steuerungsverfahren verwendet werden und beispielsweise je nach Drehzahl zwischen unterschiedlichen Steuerungseinrichtungen bzw. ein alternatives Steuerungsverfahren.

Die Elektronik betreibt die Pumpe dann nicht mehr durch Beaufschlagung mit einer Spannung an den Strängen des Elektromotors, sondern durch Einprägen von Strömen geeigneter Höhe und Kurvenformen. Die Feldfrequenz der Ansteuerung wird auf einem Vorgabewert gehalten. Durch das Einprägen eines Stromes in geeigneter Höhe kann ein Folgen des Pumpenrotors erzwungen werden.

Ferner kann mit steigender Drehfrequenz des Feldes eine ansteigende Beschleunigung für einen stillstehenden Rotor ermöglicht werden, das heißt der eingeprägte Strom kann der Felddrehzahl angepasst werden.

Dies kann für kleine, das heißt unterhalb der Drehzahlschwelle liegende Drehzahlen bedeuten, dass mit einem kleineren eingeprägten Strom als bei größeren Drehzahlen gearbeitet wird.

Ferner ermöglicht die vorliegende Erfindung vorteilhaft, die Aufheizung der Fluidpumpe und des Kraftstoffs bei sehr geringen Drehzahlen und entsprechenden Durchflüssen zu begrenzen.

Vorteilhafte Ausgestaltungen der Erfindung sind in den Unteransprüchen gekennzeichnet.

In einer vorteilhaften Ausführungsform der vorliegenden Erfindung ist vorgesehen, dass die Vorrichtung dazu ausgelegt ist, falls die erfasste Drehzahl der elektrischen Kraftmaschine unterhalb des Drehzahlschwellenwerts für die elektrische Kraftmaschine liegt, die erste Steuerungseinrichtung zum Ansteuern der elektrischen Kraftmaschine zu verwenden.

In einer weiteren vorteilhaften Ausführungsform der vorliegenden Erfindung ist vorgesehen, dass die Vorrichtung dazu ausgelegt ist, falls die erfasste Drehzahl der elektrischen Kraftmaschine oberhalb des Drehzahlschwellenwerts für die elektrische Kraftmaschine liegt, die zweite Steuerungseinrichtung zum Ansteuern der elektrischen Kraftmaschine zu verwenden.

In einer weiteren vorteilhaften Ausführungsform der vorliegenden Erfindung ist vorgesehen, dass die erste Steuerungseinrichtung dazu ausgelegt ist, den mindestens einen Motorstrom mit der angepassten Kurvenform entsprechend einer vorgegeben Feldfrequenz anzusteuern.

In einer weiteren vorteilhaften Ausführungsform der vorliegenden Erfindung ist vorgesehen, dass die erste Steuerungseinrichtung dazu ausgelegt ist, die Feldfrequenz aus einem Kennlinienfeld auszulesen.

In einer weiteren vorteilhaften Ausführungsform der vorliegenden Erfindung ist vorgesehen, dass die erste Steuerungseinrichtung dazu ausgelegt ist, die Feldfrequenz mit Hilfe von einer Steigungsberechnung zu ermitteln.

In einer weiteren vorteilhaften Ausführungsform ist vorgesehen, dass die erste Steuerungseinrichtung dazu ausgelegt ist, die Steigungsberechnung unter Berücksichtigung eines Massenträgheitsmoments eines Rotors der elektrischen Kraftmaschine zu ermitteln.

In einer weiteren vorteilhaften Ausführungsform ist vorgesehen, dass die Fluidpumpe eine Wasserpumpe oder eine Kraftstoffpumpe oder eine Ölpumpe oder eine Pumpe mit einer elektrischen Kraftmaschine in Form einer Synchronmaschine mit Permanentmagnet ist.

Die Fluidpumpe kann dabei vorteilhaft in einem Kraftfahrzeug zum Einsatz kommen, beispielsweise als Kraftstoffpumpe.

Die beschriebenen Ausgestaltungen und Weiterbildungen lassen sich beliebig miteinander kombinieren.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt. Es zeigen:
- Fig. 1: eine schematische Darstellung einer Vorrichtung zum Steuern einer Fluidpumpe für ein Kraftfahrzeug gemäß einer Ausführungsform der vorliegenden Erfindung;
- Fig. 2: eine schematische Darstellung eines Flussdiagramms zum Steuern einer Fluidpumpe für ein Kraftfahrzeug gemäß einer weiteren Ausführungsform der vorliegenden Erfindung;
- Fig. 3: eine schematische Darstellung einer Fluidpumpe für ein Kraftfahrzeug gemäß einer weiteren vorteilhaften Ausführungsform der vorliegenden Erfindung; und
- Fig. 4: eine schematische Darstellung eines Diagramms zur Darstellung des Strangstroms einer Fluidpumpe über einen bestimmten Drehzahlbereich der Fluidpumpe zur Erläuterung der vorliegenden Erfindung.

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

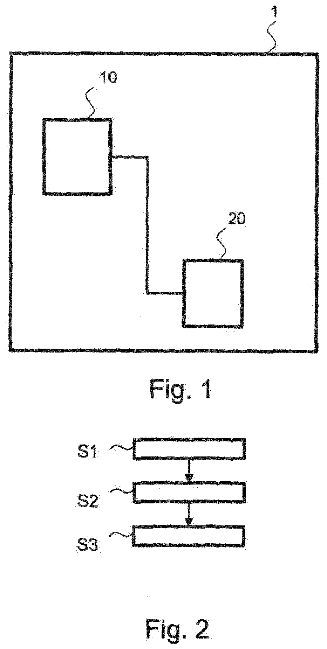

Fig. 1 zeigt eine schematische Darstellung einer Vorrichtung zum Steuern einer Fluidpumpe für ein Kraftfahrzeug.

Die Vorrichtung 1 umfasst beispielsweise eine erste Steuerungseinrichtung 10 und eine zweite Steuerungseinrichtung 20.

Die erste Steuerungseinrichtung ist beispielsweise dazu ausgelegt, eine elektrische Kraftmaschine 110 der Fluidpumpe 100 durch ein Einprägen von mindestens einem Motorstrom mit einer angepassten Stromstärke und einer angepassten Kurvenform anzusteuern.

Die zweite Steuerungseinrichtung ist beispielsweise dazu ausgelegt, eine Drehzahl der elektrischen Kraftmaschine zu erfassen und basierend auf der erfassten Drehzahl eine angepasste Spannung an die elektrische Kraftmaschine anzulegen.

Die Fig. 2 zeigt eine schematische Darstellung eines Flussdiagramms zum Steuern einer Fluidpumpe für ein Kraftfahrzeug gemäß einer weiteren Ausführungsform der vorliegenden Erfindung.

Das Verfahren zum Steuern der Fluidpumpe 100 für ein Kraftfahrzeug 2 umfasst dabei folgende Schritte:
Als ein erster Schritt des Verfahrens erfolgt beispielsweise ein Erfassen S1 einer Drehzahl der elektrischen Kraftmaschine 110 und ein Vergleichen der erfassten Drehzahl mit einem Drehzahlschwellenwert für die elektrische Kraftmaschine 110.

Als ein zweiter Schritt des Verfahrens erfolgt beispielsweise ein Einprägen S2 von mindestens einem Motorstrom mit einer angepassten Stromstärke und einer angepassten Kurvenform in die elektrische Kraftmaschine 110, falls die erfasste Drehzahl der elektrischen Kraftmaschine 110 unterhalb des Drehzahlschwellenwertes für die elektrische Kraftmaschine 110 liegt.

Als ein dritter Schritt des Verfahrens erfolgt beispielsweise ein Anlegen S3 einer angepassten Spannung an die elektrische Kraftmaschine 110 basierend auf der erfassten Drehzahl, falls die erfasste Drehzahl der elektrischen Kraftmaschine 110 oberhalb des Drehzahlschwellenwertes für die elektrische Kraftmaschine liegt.

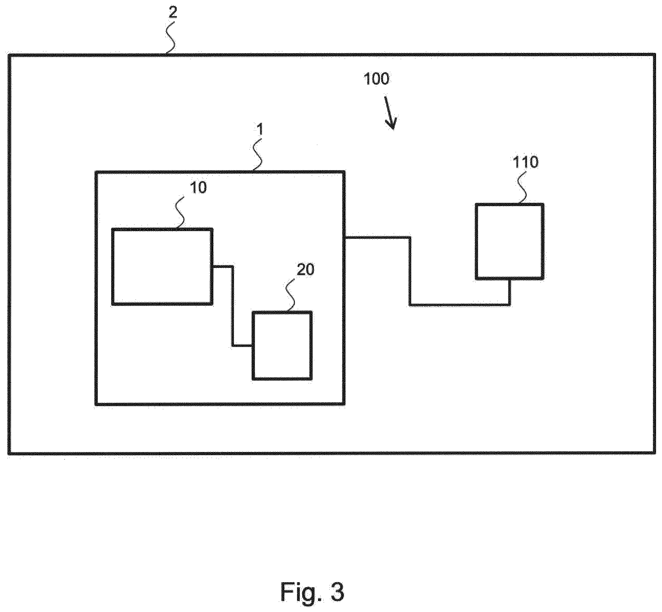

Die Fig. 3 zeigt eine schematische Darstellung einer Fluidpumpe gemäß einer weiteren Ausführungsform der vorliegenden Erfindung.

Eine Fluidpumpe 100 für ein Kraftfahrzeug 2 umfasst beispielsweise eine Vorrichtung 1 als Pumpensteuerungselektronik und eine elektrische Kraftmaschine 110.

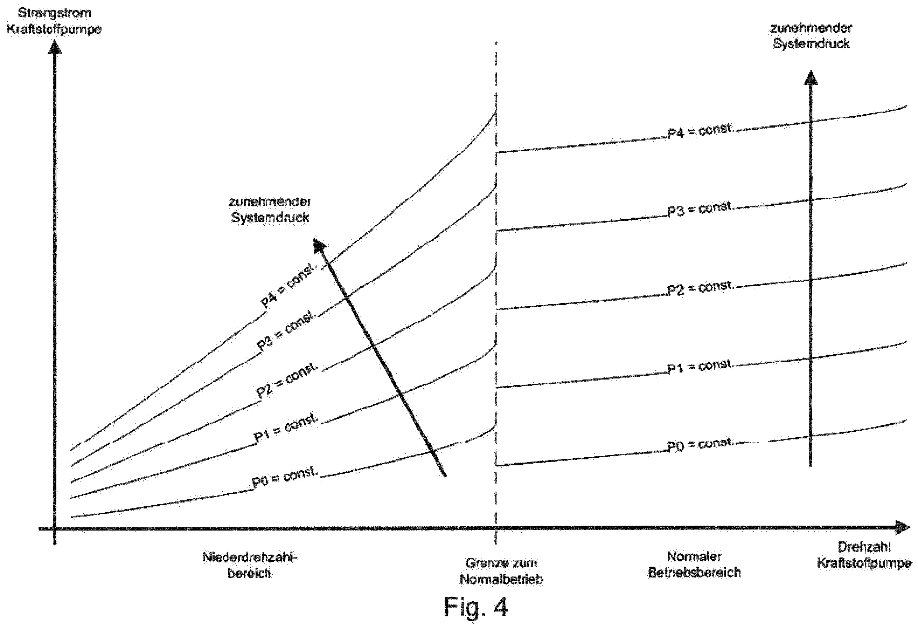

Die Fig. 4 zeigt eine schematische Darstellung eines Diagramms zur Erläuterung der Erfindung.

Auf der X-Achse des Diagramms ist beispielsweise eine Drehzahl einer Fluidpumpe aufgezeichnet.

Auf der Y-Achse des Diagramms ist beispielsweise der Strangstrom der Fluidpumpe aufgetragen.

Die in der Fig. 4 dargestellten Kennlinien bzw. Stromkurven für unterschiedliche Drücke P0 bis P4 ergeben ein Kennlinienfeld.

Der eingezeichnete Pfeil in dem Diagramm stellt die Richtung des zunehmenden Systemdrucks dar.

Eine gestrichelte Linie parallel zur y-Achse stellt eine Grenze zum Normalbetrieb dar. In anderen Worten ausgerückt ist dies ein Drehzahlschwellenwert für die elektrische Kraftmaschine 110, beispielsweise liegt die Grenze zwischen Niederdrehzahlbereich und Normalbetrieb der Fluidpumpe bei einer Drehzahl der elektrischen Kraftmaschine 110 der Fluidpumpe von 100 Umdrehungen pro Minute, oder 500 Umdrehungen pro Minute, oder 1000 Umdrehungen pro Minute oder 2000 Umdrehungen pro Minute.

Die Grenze zum Normalbetrieb unterscheidet also einen Niederdrehzahlbereich von einem normalen Betriebsbereich der Fluidpumpe bezüglich ihrer Drehzahl.

Die Fig. 4 zeigt ein Strangstrom-Drehzahl Diagramm mit Stromgrenzen des Strangstroms für Niederdrehzahlbereiche und Normalbetriebsbereiche, im Niederdrehzahlbereich entsprechen die Kurven dem eingeprägten Strom bzw. Strangstrom bei vorbestimmten Drücken P0 bis P4.

Die Fig. 4 stellt angepasste Stromstärke dar, wobei die Steuerungseinrichtungen ferner eine angepasste Kurvenform für den Motorstrom verwenden können, etwa eine Sinus-Form oder eine Rampenform.

Im normalen Betriebsbereich bzw. Normaldrehzahlbereich ist der Strangstrom bei jeweils gleichen Drücken P0 bis P4 wesentlich geringer. Der Pumpenantriebsstrom bzw. der Fluiddruck oder im Fall einer Kraftstoffpumpe der Kraftstoffdruck kann aber auch im Normalbetrieb entsprechend begrenzt werden, wenn bestimmte drehzahlabhängige Werte erreicht werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der vorliegenden Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Vorrichtung (1) zum Steuern einer Fluidpumpe (100) für ein Kraftfahrzeug (2), wobei die Vorrichtung **gekennzeichnet ist durch**:
- eine erste Steuerungseinrichtung (10), welche dazu ausgelegt ist, eine elektrische Kraftmaschine (110) der Fluidpumpe (100) **durch** ein Einprägen von mindestens einem Motorstrom mit einer angepassten Stromstärke und einer angepassten Kurvenform anzusteuern; und
- eine zweite Steuerungseinrichtung (20), welche dazu ausgelegt ist, eine Drehzahl der elektrischen Kraftmaschine (110) zu erfassen und basierend auf der erfassten Drehzahl eine angepasste Spannung an die elektrische Kraftmaschine (110) anzulegen;
wobei die Vorrichtung (1) dazu ausgelegt ist, die erfasste Drehzahl der elektrischen Kraftmaschine (110) mit einem Drehzahlschwellenwert für die elektrische Kraftmaschine (110) zu vergleichen.

2. Vorrichtung nach Anspruch 1, wobei die Vorrichtung (1) dazu ausgelegt ist, falls die erfasste Drehzahl der elektrischen Kraftmaschine (110) unterhalb des Drehzahlschwellenwerts für die elektrische Kraftmaschine (110) liegt, die erste Steuerungseinrichtung (10) zum Ansteuern der elektrischen Kraftmaschine (110) zu verwenden.

3. Vorrichtung nach Anspruch 1, wobei die Vorrichtung (1) dazu ausgelegt ist, falls die erfasste Drehzahl der elektrischen Kraftmaschine (110) oberhalb des Drehzahlschwellenwerts für die elektrische Kraftmaschine (110) liegt, die zweite Steuerungseinrichtung (20) zum Ansteuern der elektrischen Kraftmaschine (110) zu verwenden.

4. Vorrichtung nach einem der vorhergehenden Ansprüche 1 bis 3, wobei die erste Steuerungseinrichtung (10) dazu ausgelegt ist, den mindestens einen Motorstrom mit der angepassten Kurvenform entsprechend einer vorgegeben Feldfrequenz anzusteuern.

5. Vorrichtung nach Anspruch 4, wobei die erste Steuerungseinrichtung (10) dazu ausgelegt ist, die Feldfrequenz aus einem Kennlinienfeld auszulesen.

6. Fluidpumpe (100) für ein Kraftfahrzeug (2), wobei die Fluidpumpe (100) eine Vorrichtung (1) nach einem der vorhergehenden Ansprüche 1 bis 5 umfasst.

7. Fluidpumpe (100) nach Anspruch 6, wobei die Fluidpumpe (100) eine Wasserpumpe oder eine Kraftstoffpumpe oder eine Ölpumpe ist.

8. Verfahren zum Steuern einer Fluidpumpe (100) für ein Kraftfahrzeug, wobei das Verfahren folgende Schritte umfasst:
- Erfassen (S1) einer Drehzahl einer elektrischen Kraftmaschine (110) und Vergleichen der erfassten Drehzahl mit einem Drehzahlschwellenwert für die elektrische Kraftmaschine (110);
- Einprägen (S2) von mindestens einem Motorstrom mit einer angepassten Stromstärke und einer angepassten Kurvenform in die elektrische Kraftmaschine (110), falls die erfasste Drehzahl der elektrischen Kraftmaschine (110) unterhalb des Drehzahlschwellenwerts für die elektrische Kraftmaschine (110) liegt; und
- Anlegen (S3) einer angepassten Spannung an die elektrische Kraftmaschine (110) basierend auf der erfassten Drehzahl, falls die erfasste Drehzahl der elektrischen Kraftmaschine (110) oberhalb des Drehzahlschwellenwerts für die elektrische Kraftmaschine (110) liegt.

## Claims

1. Apparatus (1) for controlling a fluid pump (100) for a motor vehicle (2), wherein the apparatus is **characterized by**:
- a first control device (10) which is configured to actuate an electric prime mover (110) of the fluid pump (100) by impressing at least one motor current with an adapted current intensity and an adapted waveform; and
- a second control device (20) which is configured to detect a rotational speed of the electric prime mover (110) and to apply an adapted voltage to the electric prime mover (110) on the basis of the detected rotational speed;
wherein the apparatus (1) is configured to compare the detected rotational speed of the electric prime mover (110) with a rotational speed threshold value for the electric prime mover (110).

2. Apparatus according to Claim 1, wherein the apparatus (1) is configured to use the first control device (10) to actuate the electric prime mover (110) if the detected rotational speed of the electric prime mover (110) is below the rotational speed threshold value for the electric prime mover (110).

3. Apparatus according to Claim 1, wherein the apparatus (1) is configured to use the second control device (20) to actuate the electric prime mover (110) if the detected rotational speed of the electric prime mover (110) is above the rotational speed threshold value for the electric prime mover (110).

4. Apparatus according to one of the preceding Claims 1 to 3, wherein the first control device (10) is configured to actuate the at least one motor current with the adapted waveform in accordance with a predefined field frequency.

5. Apparatus according to Claim 4, wherein the first control device (10) is configured to read out the field frequency from a characteristic curve diagram.

6. Fluid pump (100) for a motor vehicle (2), wherein the fluid pump (100) comprises an apparatus (1) according to one of the preceding Claims 1 to 5.

7. Fluid pump (100) according to Claim 6, wherein the fluid pump (100) is a water pump or a fuel pump or an oil pump.

8. Method for controlling a fluid pump (100) for a motor vehicle, wherein the method comprises the following steps:
- detecting (S1) a rotational speed of an electric prime mover (110) and comparing the detected rotational speed with a rotational speed threshold value for the electric prime mover (110);
- impressing (S2) at least one motor current with an adapted current intensity and an adapted waveform into the electric prime mover (110) if the detected rotational speed of the electric prime mover (110) is below the rotational speed threshold value for the electric prime mover (110); and
- applying (S3) an adapted voltage to the electric prime mover (110) on the basis of the detected rotational speed if the detected rotational speed of the electric prime mover (110) is above the rotational speed threshold value for the electric prime mover (110).

## Revendications

1. Dispositif (1) destiné à commander une pompe à fluide (100) destinée à un véhicule automobile (2), le dispositif étant **caractérisé par** :
- un premier moyen de commande (10) qui est conçu pour commander un moteur électrique (110) de la pompe à fluide (100) par injection d'au moins un courant de moteur ayant une intensité de courant adaptée et une allure de courbe adaptée ; et
- un deuxième moyen de commande (20) qui est conçu pour détecter une vitesse de rotation du moteur électrique (110) et pour appliquer une tension adaptée au moteur électrique (110) en fonction de la vitesse de rotation détectée ;
le dispositif (1) étant conçu pour comparer la vitesse de rotation détectée du moteur électrique (110) à une valeur seuil de vitesse de rotation du moteur électrique (110).

2. Dispositif selon la revendication 1, le dispositif (1) étant conçu, dans le cas où la vitesse de rotation détectée du moteur électrique (110) est inférieure à la valeur seuil de vitesse de rotation du moteur électrique (110), pour utiliser le premier moyen de commande (10) pour commander le moteur électrique (110) .

3. Dispositif selon la revendication 1, le dispositif (1) étant conçu, dans le cas où la vitesse de rotation détectée du moteur électrique (110) est supérieure à la valeur seuil de vitesse de rotation du moteur électrique (110), pour utiliser le deuxième moyen de commande (20) pour commander le moteur électrique (110) .

4. Dispositif selon l'une des revendications précédentes 1 à 3, le premier moyen de commande (10) étant conçu pour commander l'au moins un courant de moteur ayant l'allure de courbe adaptée en fonction d'une fréquence de champ spécifiée.

5. Dispositif selon la revendication 4, le premier moyen de commande (10) étant conçu pour lire la fréquence de champ dans une famille de caractéristiques.

6. Pompe à fluide (100) destinée à un véhicule automobile (2), la pompe à fluide (100) comprenant un dispositif (1) selon l'une des revendications précédentes 1 à 5.

7. Pompe à fluide (100) selon la revendication 6, la pompe à fluide (100) étant une pompe à eau ou une pompe à carburant ou une pompe à huile.

8. Procédé de commande d'une pompe à fluide (100) destinée à un véhicule automobile, le procédé comprenant les étapes suivantes :
- détecter (S1) une vitesse de rotation d'un moteur électrique (110) et comparer la vitesse détectée à une valeur seuil de vitesse de rotation du moteur électrique (110) ;
- injecter (S2) au moins un courant de moteur, ayant une intensité de courant adaptée et une allure de courbe adaptée, dans le moteur électrique (110) dans le cas où la vitesse de rotation détectée du moteur électrique (110) est inférieure à la valeur seuil de vitesse de rotation du moteur électrique (110) ; et
- appliquer (S3) une tension adaptée au moteur électrique (110) sur la base de la vitesse de rotation détectée dans le cas où la vitesse de rotation détectée du moteur électrique (110) est supérieure à la valeur seuil de vitesse de rotation du moteur électrique (110).
